# EUROPÄISCHE PATENTANMELDUNG

(11) **EP 0 723 215 A2**
(43) Veröffentlichungstag der Anmeldung: **24.07.1996**
(21) Anmeldenummer: 96100250.8
(22) Anmeldetag: 10.01.1996
(51) Int. Cl.: G05G 5/05, F16K 5/00

(54) **Drehwegbegrenzer**

(30) Priorität: 19.01.1995 DE 19501456
(71) Anmelder: KSB Aktiengesellschaft, D-67227 Frankenthal (DE)
(72) Erfinder: Garrigues, Jean-Claude, F-33140 Cadaujac (FR)

(57) **Zusammenfassung**

Ein Drehwegbegrenzer, der zwischen einer Betätigungsvorrichtung (22, 23) zur Erzeugung einer Drehbewegung eines zu drehenden Bauteils (19) und einem mit der Betätigungsvorrichtung (22, 23) durch Verbindungsmittel (21) verbundenen Anschlußflansch (20) angeordnet ist, und der aus einer mit dem Anschlußflansch (20) in Wirkverbindung stehenden, eine Mittelöffnung (4) mit in diese hineinragenden Anschlagsflächen (13, 14) zur Aufnahme eines mit dem zu drehenden Bauteil (19) in Wirkverbindung stehenden Drehteils (11) aufweisenden Vorrichtung besteht, soll auf möglichst einfache Weise zuverlässig die Endpositionen einer Drehbewegung festlegen. Die dazu notwendigen Vorrichtungen bestehen aus einer Vielzahl von verschiedenen Bauteilen. Zur Vereinfachung besteht die vorgeschlagene Vorrichtung aus zwei mit Anschlagsflächen (2, 3) versehenen, scheibenförmigen Bauteilen (1, 1'), die identisch ausgebildet und verkehrt herum aufeinandergelegt sind (Fig. 5).

## Beschreibung

### Drehwegbegrenzer

### Technisches Gebiet

Die Erfindung betrifft einen Drehwegbegrenzer, der zwischen einer zur Erzeugung einer Drehbewegung eines zu drehenden Bauteils von einer ersten in eine zweite Stellung vorgesehenen Betätigungsvorrichtung und einem Anschlußflansch angeordnet ist, insbesondere einen Drehwegbegrenzer für die Betätigungsvorrichtung einer Absperrarmatur. Die Betätigungsvorrichtung kann aus einem Handhebel mit ein- und ausrückbarer Rastvorrichtung zur Feststellung des Handhebels oder aus einem Stellantrieb bestehen und insbesondere zur Betätigung einer Absperrarmatur, beispielsweise einer Klappe, in Rohrleitungen bestimmt sein.

### Stand der Technik

Aus der EP 0 350 596 B1 ist ein Drehwegbegrenzer zum hauptsächlichen Einsatz bei Absperrklappen bekannt, welcher mehrere auf Anschlagsflächen wirkende axial verschiebbare Stellmittel aufweist. Durch die Lageverschiebung der Stellmittel kann der Drehweg begrenzt werden, wobei die Klappenscheibe in eine gewünschte Stellung gebracht werden kann.

Mit der bekannten Vorrichtung kann lediglich eine Feinjustierung der Endstellungen erfolgen. Wegen des axialen Verstellwegs der Stellmittel erfolgt bei einer größeren axialen Verschiebung ein Verkanten des Endes des Stellmittels an der zugeordneten Anschlagsfläche, wodurch die Stellmittel Biegekräften ausgesetzt sind. Als Folge davon ist die für das Nachstellen erforderliche Verdrehbarkeit der Stellmittel nicht gewährleistet.

Aufgabe der Erfindung ist es daher, einen Drehwegbegrenzer zu schaffen, mit dem der Drehweg über einen weiten Bereich in möglichst einfacher Weise begrenzt wird.

### Beschreibung der Erfindung

Ein Drehwegbegrenzer läßt sich nach der Erfindung dadurch erzielen, daß die Vorrichtung aus zwei mit Anschlagsflächen versehenen, scheibenförmigen Bauteilen besteht, die identisch ausgebildet und verkehrt herum aufeinandergelegt sind.

Damit ist es beispielsweise möglich, den Drehweg bei mit Stellantrieb und mit Untersetzungsgetriebe ausgestatteten Absperrarmaturen zu begrenzen. Weiterhin können beide Endpositionen einzeln oder zusammen festgelegt werden, wobei verschiedene Zwischenpositionen eingenommen werden können. Durch den Anschlag wird schließlich sichergestellt, daß nach einer Betätigung dieselbe Ausgangsposition wieder erreicht werden kann.

Die Weiterbildung mit Langlöchern hat den Vorteil, daß die Zwischenpositionen stufenlos eingestellt werden können.

Weitere vorteilhafte Ausgestaltungen sind aus der Figurenbeschreibung zu entnehmen.

### Kurzdarstellung der Zeichnung

Eine Ausführungsform der Erfindung für einen Drehwegbegrenzer einer Absperrarmatur mit einer Drehbewegung von einem Viertelkreis ist in der Zeichnung beschrieben. Es zeigt die
- Fig. 1: ein Bauteil in Draufsicht, die
- Fig. 2: ein Drehteil im Querschnitt, die
- Fig. 3: das Drehteil im Längsschnitt, die
- Fig. 4: ein Halteteil in Draufsicht, die
- Fig. 5: Anordnung des Drehwegbegrenzers in einer Absperrarmatur mit Vierteldrehung des Absperrkörpers, die
- Fig. 6: den Drehwegbegrenzer gemäß Schnitt AA aus Fig. 5 in der Stellung zur Ausführung einer nicht eingeschränkten Drehbewegung um 90° und die

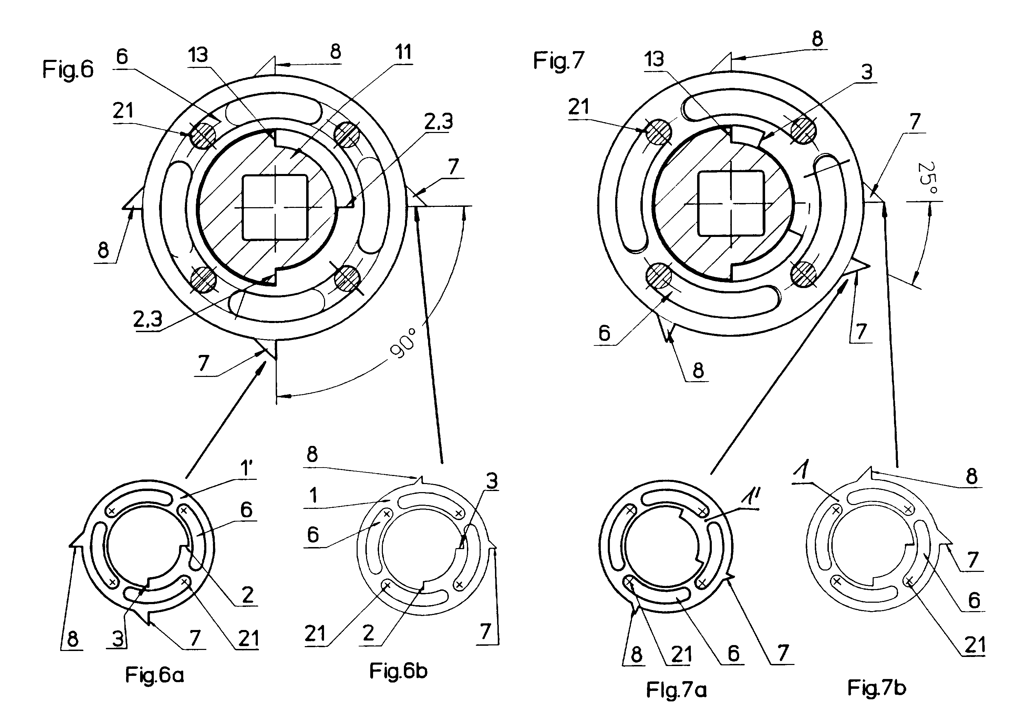

- Fig. 6 a, b: Einzeldarstellungen hierzu des wesentlichen Bauteils in verkleinerter Form, die
- Fig. 7: den Drehwegbegrenzer in der Stellung zur Ausführung einer maximal eingeschränkten, hier um 65°, Drehbewegung, die
- Fig. 7 a, b: Einzeldarstellungen hierzu des wesentlichen Bauteils in verkleinerter Form, die

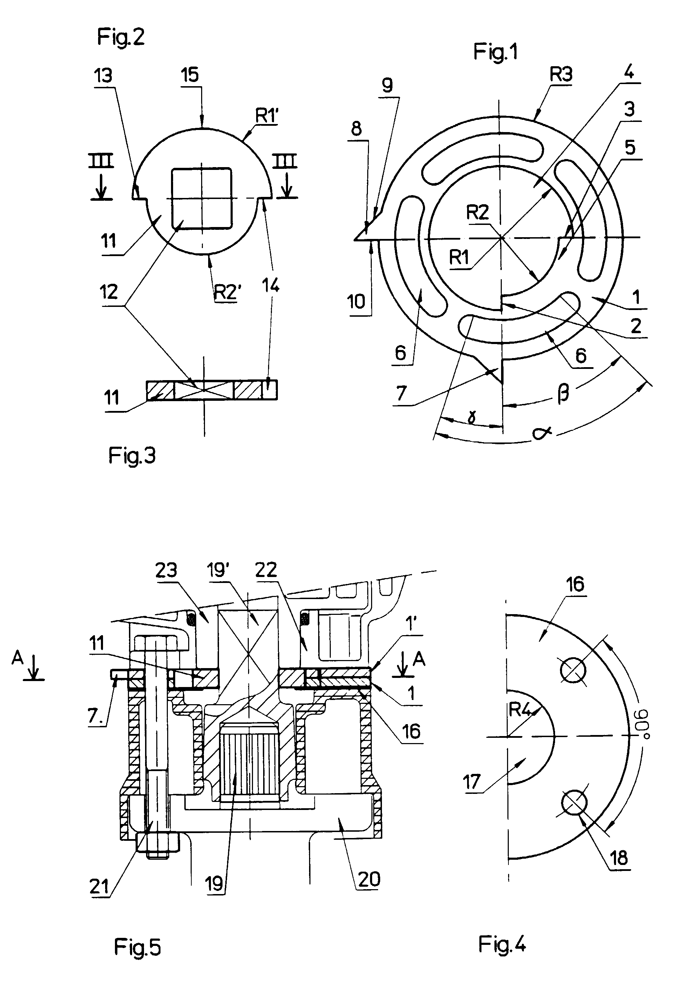

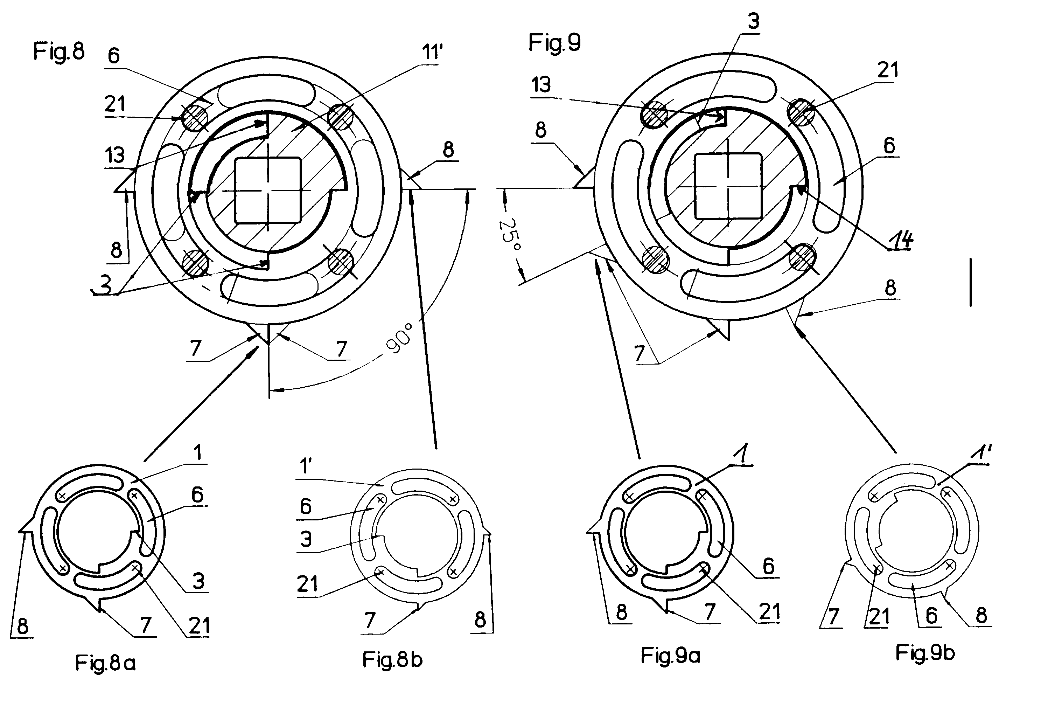

- Fig. 8: einen Dreghwegbegrenzer mit einem gegenüber Fig. 2 abgewandelten Drehteil zur Ausführung einer nicht eingeschränkten Drehbewegung um 90°.
- Fig. 8 a, b: Einzeldarstellungen hierzu des wesentlichen Bauteils in verkleinerter Form, die
- Fig. 9: den Drehwegbegrenzer in der Stellung zur Ausführung einer einseitig eingeschränkten, hier um 65°, Drehbewegung.

### Weg zur Ausführung

In Fig. 1 ist ein scheibenförmiges, vorzugsweise aus Blech gestanztes Bauteil 1 des Drehwegbegrenzers dargestellt, das einen Umfangswinkel von 90° einschließende Anschlagsflächen 2, 3 aufweist. Die Anschlagsflächen 2, 3 ragen in eine Mittelöffnung 4 mit einem Innenradius R1 und bilden einen Vorsprung 5, dessen Radius R2 kleiner als der Innenradius R1 ist.

Auf dem Bauteil 1 sind zwischen dem Innenradius R1 und einem Außenradius R3 vier Langlöcher 6 angeordnet, welche eine gekrümmte Form aufweisen und gleichmäßig über dem Umfang verteilt angeordnet sind. Die Langlöcher 6 erstrecken sich über einen Umfangswinkel α von 65°, der sich aus einem Winkel β von 45° und einem weiteren Winkel γ von 20° zusammensetzt. Gegenüber den Anschlagsflächen 2 und 3 sind die Langlöcher 6 um eben diesen Winkel γ von 20° im Uhrzeigersinn verdreht angeordnet. Wie aus der Fig. 1 ersichtlich ist, wird der Umfangswinkel *α* durch die tatsächliche Abmessung der Langlöcher 6 um den Betrag übertroffen, um den die in Fig. 5 gezeigten Verbindungsmittel zu berücksichtigen sind, die durch die Langlöchern 6 geführt sind.

Im Winkelbereich der Anschlagsfläche 2 ist eine erste Markierung 7 und um 90° im Uhrzeigersinn verdreht dazu eine weitere Markierung 8 angeordnet. Die Markierungen haben die Form eines Sägezahns mit einer schrägen und einer sich in radialer Richtung erstreckenden Flanke 9, 10.

In Fig. 2 ist ein scheibenförmiges Drehteil 11 mit einer Öffnung 12 zur Aufnahme eines Vierkants gezeigt. Am äußeren Rand sind Anschlagsflächen 13, 14 vorgesehen, welche von einem Radius R1' zu einem Radius R2' übergehen und einen Vorsprung 15 begrenzen, wobei sie einen Winkel von 180° einschließen. Die Radien R1' und R2' sind so gewählt, daß das Drehteil 11 in der Mittelöffnung des Bauteils 1 von einer Anschlagsfläche 2, 3 zur anderen verdreht werden kann.

In Fig. 3 läßt sich die Scheibenform des Drehteils 11 sowie die Lage der Anschlagsfläche 14 erkennen.

In Fig. 4 ist ein Halteteil 16 dargestellt, dessen Mittelöffnung 17 einen Radius R4 aufweist, der kleiner als der Radius R2' des Drehteils 11 ist und so eine Auflage für dieses bildet. Weiterhin sind Bohrungen 18 zu sehen, durch welche Verbindungsmittel gesteckt werden und welche jeweils um 90° versetzt angeordnet sind. Diese Bohrungen 18 liegen auf demselben Radius wie die Langlöcher 6.

In Fig. 5 ist der aus den doppelt aufeinandergelegten Bauteilen 1, 1', dem Drehteil 11 und dem Halteteil 16 bestehende Drehwegbegrenzer in eingebautem Zustand dargestellt. Ein zu drehendes Bauteil 19 ragt über einen Anschlußflansch 20 einer Absperrarmatur in eine Betätigungsvorrichtung mit einem durch Verbindungsmittel 21 fest mit dem Anschlußflansch 20 verbundenen Teil 22 und einem mit dem zu drehenden Bauteil 19 verbundenen drehbaren Teil 23.

Das Drehteil 11 ist über ein Zwischenstück 19' mit dem Bauteil 19 oder dem drehbaren Teil 23 der Betätigungsvorrichtung durch die Öffnung 12 in Form eines Vierkants formschlüssig verbunden. Die Bauteile 1, 1' und das Halteteil 16 sind durch die Verbindungsmittel 21 mit dem Anschlußflansch und dem feststehenden Teil 22 der Betätigungsvorrichtung verbunden.

Anhand der Fig. 6 und 7 wird die Funktionsweise des Drehwegbegrenzers erläutert. In Fig. 6 a, b sind zunächst in einer Verkleinerung das Bauteil 1 und das verkehrt herum angeordnete identische Bauteil 1' dargestellt. Die Spiegelung der Bauteile 1, 1' ausgehend von Fig. 6 b nach Fig. 6 a an einer zwischen ihnen angeordneten gedachten Achse und die anschließende Verdrehung des Bauteils 1' um 90° gegen den Uhrzeigersinn ändert die Lage der Markierungen 7, 8 und der Langlöcher 6 mit den relativen Positionen der Verbindungsmittel 21 darin sowie die Lage der Anschlagsflächen 2 und 3.

Zusammengefügt erhält man die darüberstehende Fig. 6. Man erkennt die Anschlagsflächen 2, 3, 13 des Bauteils 1' bzw. des Drehteils 11, welche eine Drehbewegung um 90° im Uhrzeigersinn ermöglichen. Die Verbindungsmittel 21 befinden sich in der jeweils äußersten Position in den Langlöchern 6 der Bauteile 1, 1', wobei jedoch die Langlöcher 6 der Bauteile 1, 1' sich nur teilweise überlappen, dargestellt durch den dünn ausgezogenen Halbkreis. Die Markierungen 7, 8 zeigen zwischen zwei sich gegenüberstehenden radialen Flanken einen Winkel von 90° an, was bedeutet, daß der Drehweg nicht über die maximalen Endstellungen hinaus begrenzt ist.

In der Fig. 7 a ist die maximale Verdrehung des Bauteils 1' gegenüber dem in Fig. 7 b dargestellten Bauteil 1 durchgeführt worden. Die Langlöcher 6 der Bauteile 1, 1' decken sich und die freien Anschlagsflächen 3, 13 des Bauteils 1' bzw. des Drehteils 11 ermöglichen nur noch eine Drehbewegung um 25° gegen den Uhrzeigersinn. Angezeigt wird dies durch die radialen Flanken der Markierung 7.

Durch Anordnung der Markierung 8 um 90° entgegen dem Uhrzeigersinn zur Markierung 7 und die Spiegelung des Sägezahnprofils ändert sich die Anzeige vom möglichen Drehweg zur Anzeige der Begrenzung des begrenzten Drehwegs.

Werden zwei Bauteile 1 einfach aufeinandergelegt, erhält man einen Drehwegbegrenzer für entweder die Anfangsposition, z.B. die Geschlossenstellung einer Absparrklappe, oder die Endposition, z.B. die Offenstellung einer Absperrklappe.

Erst die Anordnug verkehrt herum ermöglicht die gleichzeitige Begrenzung der Anfangs- wie auch Endposition. Die Einstellung wird wie folgt durchgeführt: Mit Hilfe der Betätigungsvorrichtung 22, 23 wird das zu drehende Bauteil 19, beispielsweise eine mit einer Klappenscheibe verbundene Klappenachse, in die gewünschte Zwischenposition gebracht. Dann werden die Verbindungsmittel 21 gelöst und das Bauteil 1 oder das Bauteil 1' in die entsprechende Richtung bis zum Anschlag an das Drehteil 11 verdreht. Anschließend werden die Vebindungsmittel 21, beispielsweise Schrauben, wieder angezogen. Dadurch ist diese Position festgelegt. Falls auch in der anderen Richtung eine Zwischenposition eingestellt werden soll, verfährt man ebenso, wobei man Sorge trägt, daß sich die erste Position nicht verstellt.

Anstelle von Langlöchern 6 können auch einzelne kreisrunde Bohrungen vorgesehen werden. Zwar müssen dann die Verbindungsmittel 21 vollständig entfernt weden um eine Verdrrehung zu ermöglichen und es kann keine stufenlose Einstellung vorgenommen werden. Dafür sind aber feste Verstellschritte vorgegeben, die durch den Bohrungsabstand bestimmt sind.

Das Drehteil 11 kann in einer in der Fig. 8, 8 a, 8 b, 9, 9 a, 9 b dargestellten weiteren Ausführungsform so ausgebildet sein, daß die Anschlagsflächen 13, 14 einen Winkel von 90° einschließen. Im Gegensatz zu der in den Fig. 6 a und 6 b dargestellten Anordnung der Bauteile 1, 1' wird, ausgehend von dem Bauteil 1' aus Fig. 8 b die Lage des zweiten Bauteils 1 durch Spiegelung an einer zwischen ihnen angeordneten gedachten Achse erhalten. Die aus Fig. 6 bekannte Verdrehung entfällt. Durch diese Art der Spiegelung begrenzen jeweils die Anschläge 3 des Bauteils 1 bzw. 1' den Drehweg des Drehteils 11'. Auch in dieser Anordnung ist es möglich, beide Endpositionen durch Verdrehen der Bauteile 1, 1' zu variieren. Wird im vorherigen Fall hierzu das Bauteil 1' gegen den Uhrzeigersinn verdreht (Fig. 7 a), so erfolgt in dieser Anordnung eine Verdrehung des Bauteils 1' im Uhrzeigersinn gegenüber dem Bauteil 1 (Fig. 9 b). Durch Verdrehen des Bauteils 1 gegen den Uhrzeigersinn wird die zweite Endstellung der Drehbewegung verschoben. Die Markierungen 7, 8 sind jeweils paarweise zueinander angeordnet. Dadurch findet eine Anzeige des verfügbaren Drehwinkels zweifach durch die Markierungen 7, 8 statt.

### Gewerbliche Anwendbarkeit

Erfindungsgemäße Drehwegbegrenzer finden insbesondere Anwendung bei in Rohrleitungen eingebauten Absperrklappen.

## Patentansprüche

1. Drehwegbegrenzer, der zwischen einer Betätigungsvorrichtung (22, 23) zur Erzeugung einer Drehbewegung eines zu drehenden Bauteils (19) und einem mit der Betätigungsvorrichtung (22, 23) durch Verbindungsmittel (21) verbundenen Anschlußflansch (20) angeordnet ist, und der aus einer mit dem Anschlußflansch (20) in Wirkverbindung stehenden, eine Mittelöffnung (4) mit in diese hineinragenden Anschlagsflächen (13, 14) zur Aufnahme eines mit dem zu drehenden Bauteil (19) in Wirkverbindung stehenden Drehteils (11) aufweisenden Vorrichtung besteht, **dadurch gekennzeichnet, daß** die Vorrichtung aus zwei mit Anschlagsflächen (2, 3) versehenen, scheibenförmigen Bauteilen (1, 1') besteht, die identisch ausgebildet und verkehrt herum aufeinandergelegt sind.

2. Drehwegbegrenzer nach Anspruch 1, dadurch gekennzeichnet, daß die Anschlagsflächen (2, 3) des Bauteils (1) einen Umfangswinkel von im wesentlichen 90° einschließend angeordnet sind, daß insgesamt vier auf einem zwischen dem Außen- und dem Innenradius (R3, R1) liegenden Radius und gleichmäßig über den Umfang verteilt angeordnete, gekrümmte Langlöcher (6) vorgesehen sind, die sich jeweils über einen Umfangswinkel von im wesentlichen 45 bis 65° erstrecken.

3. Drehwegbegrenzer nach Anspruch 2, dadurch gekennzeichnet, daß die Langlöcher (6) gegenüber den Anschlagsflächen (2, 3) um den 45° übertreffenden Betrag des Umfangswinkels der Langlöcher (6) im Uhrzeigersinn verdreht auf dem Bauteil (1) angeordnet sind.

4. Drehwegbegrenzer nach Anspruch 3 oder 4, dadurch gekennzeichnet, daß das Bauteil (1) an seinem äußeren Umfang eine Markierung (7), insbesondere eine Nase oder eine Vertiefung, aufweist, die im wesentlichen im Winkelbereich einer der Anschlagflächen (2, 3) liegt.

5. Drehwegbegrenzer nach Anspruch 4, dadurch gekennzeichnet, daß das Bauteil (1) an seinem äußeren Umfang eine weitere Markierung (8) aufweist, die zur ersten Markierung (7) um 90° im Uhrzeigersinn versetzt angeordnet ist.
